# EUROPÄISCHE PATENTSCHRIFT

(11) **EP 0 425 041 B1**
(45) Veröffentlichungstag und Bekanntmachung des Hinweises auf die Patenterteilung: **21.08.1996**
(21) Anmeldenummer: 90202813.3
(22) Anmeldetag: 22.10.1990
(51) Int. Cl.: H04N 9/89

(54) **Digitale Schaltungsanordnung zur Verarbeitung eines analogen Bildsignals mit einem unverkoppelten Systemtakt**
Digital circuit for the processing of an analogue picture signal with an asynchronous clock
Circuit numérique pour le traitement d'un signal d'image analogique avec une horloge asynchrone

(30) Priorität: 25.10.1989 DE 3935453
(43) Veröffentlichungstag der Anmeldung: 02.05.1991
(73) Patentinhaber: Philips Patentverwaltung GmbH, 22335 Hamburg (DE); Philips Electronics N.V., 5621 BA Eindhoven (NL)
(72) Erfinder: Herrmann, Matthias, W-3300 Braunschweig (DE)
(74) Vertreter: von Laue, Hanns-Ulrich, Dipl.-Ing.

(56) Entgegenhaltungen:
- EP-A- 0 174 049
- EP-A- 0 300 633
- US-A- 4 035 832
- US-A- 4 069 499
- PATENT ABSTRACTS OF JAPAN vol. 9, no. 251 (E-348)(1974) 8. Oktober 1985 & JP-A-60 102 084
- FERNSEH- UND KINO-TECHNIK Bd. 40, Nr. 3, 1986, HEIDELBERG, DE Seiten 105 - 111; WILHELM MÖRING: 'Konzepte der Taktverkopplung für den digitalen Fernsehempfänger'

## Beschreibung

Die Erfindung betrifft eine digitale Schaltungsanordnung zur Verarbeitung eines analogen Bildsignals, welche mit einem nicht mit dem Bildsignal verkoppeltem festen Systemtakt arbeitet, in welcher das analoge Bildsignal mittels eines Analog-Digital-Wandlers in ein digitales in dem Systemtakt vorliegendes Bildsignal umgesetzt und als solches verarbeitet wird und in welcher ein Korrekturspeicher und ein Interpolator mit Dezimator vorgesehen sind, die der Konvertierung des digitalen Bildsignals auf ein durch den Systemtakt vorgegebenes Synchronsignalraster dienen.

Eine derartige Schaltungsanordnung ist aus der Veröffentlichung "Fernseh- und Kino-Technik", 40. Jahrgang, Nr. 3/1986, Seiten 105 bis 111, bekannt. In dieser Veröffentlichung ist die grundsätzliche Arbeitsweise eines Fernsehempfängers, welcher mit einem unverkoppelten Takt arbeitet, kurz beschrieben. Unverkoppelter Takt bedeutet dabei, daß der Systemtakt, in dem die in den digitalen Bereich übersetzten Bildsignale verarbeitet werden, völlig unabhängig von dem Bildsignal ist, also weder von dessen Farbträgerfrequenz noch von dessen Horizontalfrequenz abhängig ist. In dieser Veröffentlichung ist erwähnt, daß zur Beseitigung der Asynchronität zwischen dem mit dem Systemtakt abgetasteten Eingangssignal und einem in Ableitung des unverkoppelten Systemtakt generierten Horizontal- und Vertikalablenkrasters ein Puffer und Interpolator vorzusehen ist. Eine genauere Arbeitsweise dieses Puffers und Interpolators geht aus dieser Veröffentlichung nicht hervor.

Aus der europäischen Patentanmeldung EP-A-0 300 633 ist eine Vorrichtung zur Zeitbasisfehlerkorrektur bekannt, welche Bildsignale mit einer festen Taktfrequenz abtastet, diese mit der gleichen Frequenz verarbeitet und wieder in den analogen Bereich wandelt. Die Vorrichtung dient dazu, Zeitbasisfehler in dem analogen Eingangssignal zu korrigieren. In der Vorrichtung ist ein adaptives Interpolationsfilter vorgesehen, welches dazu dient, den Wert des abgetasteten Bildsignals zu den Zeitpunkten zu generieren, welche Abtastzeitpunkte gewesen wären, wenn kein Zeitbasisfehler vorgelegen hätte. Das adaptive Interpolationsfilter speichert dazu in einem Schieberegister acht aufeinanderfolgende Abtastwerte des digitalen Bildsignals ab. Jeweils vier der gespeicherten Abtastwerte werden mit Bewertungsfaktoren multipliziert und anschließend addiert. Es wird auf diese Weise eine Zeitbasisfehlerkorrektur vorgenommen, deren Zeitfehler kleiner als eine Abtastperiode ist. Zur Korrektur von Zeitfehlern, welche ganzzahlige Vielfache der Abtastperiode sind, werden aus den in dem Schieberegister gespeicherten Abtastwerten die geeigneten vier Abtastwerte ausgewählt. Dieses Filter gestattet es also, innerhalb eines engen zeitlichen Bereiches einiger Abtastwerte eine Zeitbasisfehoerkorrektur sowohl in ganzzahligen Vielfachen des Abtasttaktes vorzunehmen, wie auch durch Interpolation Zeitbasisfehler, welche kleiner als eine Abtastperiode sind, auszugleichen.

Aus US-A-4 035 832 ist eine Anordnung zur Speicherung digitaler Video-Daten bekannt, bei der mehrere Schieberegister vorgesehen sind, in die die Eingangsdaten alternierend eingelesen werden. In den Schieberegistern sind mehr Speicherzellen vorgesehen, als an sich erforderlich. Daher besteht, gesteuert durch zusätzliche Taktimpulse, die Möglichkeit, Zeitbasisschwankungen der Videodaten auszugleichen.

Es ist Aufgabe der Erfindung, eine verbesserte und praktisch realisierbare digitale Schaltungsanordnung der eingangs genannten Art anzugeben.

Diese Aufgabe ist erfindungsgemäß dadurch gelöst, daß der Korrekturspeicher eine vorgegebene Anzahl von Speichersegmenten aufweist, welche zur Abspeicherung der Abtastwerte je einer Bildzeile vorgesehen sind, die in dem Systemtakt ein- bzw. ausgelesen werden, daß durch jeden Impuls des Horizontalsynchronsignals des noch nicht konvertierten Bildsignals ein Einlesevorgang der darauffolgenden Bildzeile in ein Speichersegment ausgelöst wird und daß durch jeden Impuls des vom Systemtakt abgeleiteten Horizontalsynchronsignals ein Auslesevorgang der auf die zuvor ausgelesenen Bildzeile folgenden Bildzeile ausgelöst wird.

In der Schaltungsanordnung wird das analoge Bildsignal mit dem festen, nicht mit dem Bildsignal verkoppelten Systemtakt abgetastet. Auf diese Weise wird ein digitales Bildsignal erhalten, dessen Abtasttakt asynchron freischwebend zum Eingangssignal ist. Es ergibt sich dabei der grundsätzliche Vorteil, daß die Frequenz des Systemtaktes frei wählbar ist, wobei allerdings die Bedingung des Abtasttheorems zu beachten ist. Dieser einzige, frei wählbare Takt bietet für den Fall des Einsatzes von Halb- oder Vollbildspeichern außerdem den Vorteil, daß er bezüglich seiner Frequenz so gewählt werden kann, daß der Speicheraufwand so gering wie möglich gehalten werden kann. Gegenüber anderen bekannten Lösungen, welche zur Zeitbasis Fehlerkorrektur von Bildsignalen mit einem Speicher arbeiten, der mit verschiedenen Takten ein- bzw. ausgelesen wird, wobei der Takt zum Einlesen meist in irgendeiner Weise mit dem Bildsignal selbst verkoppelt ist, ergeben sich darüber hinaus die Vorteile, daß infolge des Vorhandenseins nur eines Taktes keine Intereferenzen zwischen verschiedenen Takten entstehen können und daß Phasenregelschleifen und ähnliches zur Verkoppelung eines der Takte mit dem Bildsignal entfallen.

Das wie oben beschrieben gewonnene digitale Bildsignal, welches das Horizontal-Synchronsignal enthält, wird in Abhängigkeit der Impulse dieses Horizontal-Synchronsignals in den Korrekturspeicher eingelesen. Jeder Impuls des Horizontal-Synchronsignals löst einen Einlesevorgang der darauffolgenden Zeile in ein Speichersegment des Korrekturspeichers aus. Auf diese Weise werden die Speichersegmente des Korrekturspeichers nacheinander mit den aufeinanderfolgenden Bildzeilen beschrieben.

Der Auslesevorgang der Bildzeilen aus den Speichersegmenten wird nun in Abhängigkeit eines Horizontal-Synchronsignals vorgenommen, welches nicht mehr von dem Bildsignal abhängig ist, sondern welches in Abhängigkeit des unverkoppelten Systemtaktes generiert wird. Bei jedem auf diese Weise erzeugten Impuls eines Horizontal-Synchronsignals wird eine Bildzeile aus einem Speichersegment des Korrekturspeichers ausgelesen. Es versteht sich von selbst, daß die Bildzeilen in gleicher Reihenfolge aus den Speichersegmenten ausgelesen werden, wie sie eingelesen wurden. Das in Abhängigkeit des Systemtakts generierte Horizontal-Synchronsignal ist selbstverständlich in der Weise generiert, daß Impulse in gleichem zeitlichen Abstand auftreten wie in dem in dem Bildsignal enthaltenen Horizontal-Synchronsignal. Diese theoretische Übereinstimmung der beiden Signale ist in der Praxis jedoch nicht immer gegeben, da Zeitbasisfehler auftreten können. Dies gilt in besonderer Weise für die Wiedergabe von Bildsignalen aus einem Videorecorder.

In dem Falle, daß ein solcher Zeitbasisfehler auftritt, sind die Impulse der beiden Horizontal-Synchronsignale nicht mehr synchron zueinander. Diese Asynchronität der Signale wird mittels des Korrekturspeichers ausgeglichen. Der Korrekturspeicher ist dazu allerdings nur insoweit in der Lage, als er eine Asynchronität in ganzzahligen Vielfachen der Abtastf requenz ausgleichen kann. Bei der oben beschriebenen Arbeitsweise des Korrekturspeichers geschieht dies automatisch dadurch, daß die Impulse der beiden Horizontal-Synchronsignale nicht mehr gleichzeitig auftreten. Es sind dann auch der Einlesevorgang und der Auslesevorgang der Bildzeilen nicht mehr synchron zueinander.

Wie praktische Untersuchungen gezeigt haben, kann selbst bei Signalen von Videorecordern davon ausgegangen werden, daß die beschriebenen Phasendifferenzen zwischen beiden Signalen im längeren zeitlichen Mittel etwa Null sind, so daß kein Überlauf des Korrekturspeichers eintritt.

Nach Verlassen des Korrekturspeichers wird das so bereits konvertierte Bildsignal dem Interpolator mit Dezimator zugeführt, welcher beispielsweise wie in der europäischen Patentanmeldung 0 300 633 beschrieben funktioniert. In dem Interpolator mit Dezimator wird dann eine weitere Fein-Konvertierung vorgenommen, d.h. ein Phasenausgleich, welcher kleiner ist als eine Abtastperiode. Dies geschieht durch Überabtastung des digitalen Fernsehsignals und Berechnung von Zwischenwerten. Je nach Aufwand des Interpolators mit Dezimator können dabei beispielsweise bis zu 16 Zwischenwerte zwischen zwei Abtasttakten errechnet werden. Nach Verlassen des Interpolators mit Dezimator ist das Bildsignal nunmehr nahezu vollkommen synchron mit dem von dem Systemtakt vorgegebenen Horizontal-Synchronsignalraster.

Damit dieser Phasenausgleich möglichst genau vorgenommen werden kann, ist es erforderlich, die Impulse der beiden Horizontal-Synchronsignale möglichst genau zu detektieren. Dies gilt in besonderer Weise für diejenigen des Horizontal-Synchronsignals, welches in dem Fernsehsignal enthalten ist, da hier durch Übertragungsstörungen bzw. bei Wiedergabe von einem Videorecorder oftmals Pegelschwankungen bzw. Schwankungen der Flankensteilheit der Impulse vorkommen. Es ist daher nach einer weiteren Ausgestaltung der Erfindung vorgesehen, daß das noch nicht konvertierte digitale Bildsignal einem Tiefpaßfilter und nachfolgend einer Abtrennstufe zugeführt wird, in der die Impulse des in ihm enthaltenen Horizontalsynchronsignals abgetrennt werden und der ein Flankendetektor nachgeschaltet ist, in dem detektiert wird, wann die Rückflanken der Impulse einen vorgegebenen Sollwert erreichen, und der gegebenenfalls ein Steuersignal an den Korrekturspeicher zur Auslösung eines Einlesevorganges einer Bildzeile abgibt, und daß jeweils ein Auslesevorgang ausgelöst wird, wenn die Rückflanken der Impulse des vom Systemtakt abgeleiteten Horizontalsynchronsignals den vorgegebenen Sollwert erreichen.

Nach einer weiteren Ausgestaltung der Erfindung ist vorgesehen, daß der Einlesevorgang der Daten der Bildzeilen in die Speichersegmente in einem Einlesezyklus vorgenommen wird, in welchem die Speichersegmente in vorgegebener Reihenfolge mit den Daten je einer Bildzeile beschrieben werden, wobei nach Beschreiben des letzten Speichersegments wieder bei dem ersten begonnen wird, und daß der Auslesevorgang in einem gleichen Zyklus vorgenommen wird, welcher gegenüber dem Einlesezyklus bei nicht erforderlicher Konvertierung des Bildsignals auf den Systemtakt um eine vorgegebene Anzahl von Speichersegmenten versetzt ist.

Wie oben bereits erwähnt, hat sich gezeigt, daß die Phasendifferenzen zwischen dem in dem Eingangssignal enthaltenen Synchronsignalraster und dem in Abhängigkeit des Systemtaktes generierten Synchronsignalraster im längeren zeitlichen Mittel nahezu Null sind. Aus diesem Grunde ist es nicht erforderlich, daß der Korrekturspeicher beispielsweise so viele Speichersegmente aufweist, wie ein Bild Bildzeilen enthält. Es genügt vielmehr eine relativ kleine Zahl von Speichersegmenten, welche zyklisch beschrieben werden. Dies bedeutet, daß die Speichersegmente in einer vorgegebenen Reihenfolge beschrieben werden und daß nach Beschreiben des letzten Speichersegmentes wieder mit dem ersten, bereits vorher beschriebenen Speichersegment beim Einlesen begonnen wird.

Der Auslesevorgang der Bildzeilen aus den Speichersegmenten wird im gleichen Zyklus vorgenommen. Dieser Auslesezyklus ist jedoch gegenüber dem Einlesezyklus um einige Speichersegmente versetzt. Dieser Versatz der beiden Zyklen kann in Abhängigkeit des vorzunehmenden Phasenausgleiches größer oder kleiner werden.

Zur optimalen Ausnutzung der Speichersegmente ist es vorteilhaft, wie nach einer weiteren Ausgestaltung der Erfindung vorgesehen ist, daß die Zahl von Speichersegmenten, um die der Auslesezyklus gegenüber dem Einlesezyklus bei nicht vorzunehmender Konvertierung versetzt ist, etwa gleich der halben Zahl der insgesamt vorgesehenen Speichersegmente ist.

Es hat sich gezeigt, daß selbst für die Wiedergabe von Bildsignalen von einem Videorecorder vier Speichersegemente ausreichend sind, wie dies nach einer weiteren Ausgestaltung der Erfindung vorgesehen ist.

Nach einer weiteren Ausgestaltung der Erfindung ist vorgesehen, daß jedem Speichersegment des Korrekturspeichers je ein Speicherplatz eines Phasenpufferspeichers fest zugeordnet ist und daß bei Detektion der Rückflanke eines Impulses des Horizontalsynchronsignals des nicht konvertierten Bildsignals der nächste Abtastwert des Bildsignals als Maß für die von dem Interpolator mit Dezimator vorzunehmende Konvertierung in demjenigen Speicherplatz abgespeichert wird, der dem Speichersegment zugeordnet ist, in das die nachfolgende Bildzeile eingelesen wird.

Nachdem in dem Korrekturspeicher eine Konvertierung des Bildsignals um ganzzahlige Vielfache der Abtastperiode vorgenommen worden ist, um Phasendifferenzen zwischen dem Eingangssignal und dem Horizontal-Synchronraster des Systemtaktes auszugleichen, ist mittels des Interpolators mit Dezimator eine Fein-Konvertierung vorzunehmen, welche einen Phasenausgleich bewirkt, der kleiner ist als eine Abtastperiode. Dazu ist es vorteilhaft, nach Detektion eines Impulses des in dem Bildsignal enthaltenen Horizontal-Synchronsignals den darauffolgenden Abtastwert des Bildsignals abzuspeichern, da dieser Abtastwert in Abhängigkeit der Pegelhöhe, den er repräsentiert, ein Maß für die von dem Interpolator mit Dezimator noch vorzunehmende Konvertierung darstellt. Die Abspeicherung dieser Abtastwerte wird erfindungsgemäß in fester Zuordnung zu den zugehörigen Bildzeilen vorgenommen. Dies geschieht dadurch, daß jedem Speichersegment in dem Korrekturspeicher je ein Speicherplatz eines Phasenpufferspeichers fest zugeordnet ist. In dem Speicherplatz wird der oben beschriebene Abtastwert abgespeichert, welcher zu der in dem entsprechenden Speichersegment des Korrekturspeichers abgespeicherten Bildzeile gehört.

Beim Auslesen einer jeden Bildzeile aus einem Speichersegment des Korrekturspeichers wird dann der entsprechende Abtastwert aus dem zugeordneten Speicherplatz des Phasenpufferspeichers ebenfalls ausgelesen und in dem Interpolator mit Dezimator zur Bestimmung der erforderlichen Konvertierung eingesetzt.

Die Höhe des Abtastwertes ist ein Maß für die noch vorzunehmende Konvertierung. Da jedoch die Flankensteilheit der in dem Bildsignal enthaltenen Horizontal-Synchronsignal-Impulse schwanken kann, wie dies beispielsweise bei Wiedergabe von Video-Recordern meist der Fall ist, kann dies zu einer Fehlbewertung führen. Es ist daher nach einer weiteren Ausgestaltung der Erfindung vorgesehen, daß für jede Bildzeile der in dem entsprechenden Speicherplatz des Phasenpufferspeichers abgetastete Abtastwert einem Kennlinienbewerter zugeführt wird, welcher unter Berücksichtigung der über mehrere Bildzeilen gemittelten Flankensteilheit der Horizontal-Synchronsignal-Impulse ein Steuersignal für den Interplator mit Dezimator liefert, das für die jeweilige Bildzeile ein Maß für die von diesem vorzunehmende Konvertierung des Bildsignals darstellt.

Infolge der Mittelung kann unabhängig von der Flankensteilheit der Impulse des Horizontal-Synchronsignals aus der Höhe des in dem Speicherplatz abgespeicherten Abtastwertes direkt auf die noch vorzunehmende Konvertierung geschlossen werden.

Um hierbei auch noch Schwankungen des Pegels des Bildsignals zu berücksichtigen, ist nach einer weiteren Ausgestaltung der Erfindung vorgesehen, daß jeder aus einem Speicherplatz des Phasenpufferspeichers ausgelesene Abtastwert einem Addierer zugeführt wird, in welchem eine Differenzbildung mit einem konstanten Schwellenwert vorgenommen wird und dessen Ausgangssignale dem Kennlinienbewerter zugeführt werden.

Infolge der Differenzbildung kann unabhängig vom absoluten Pegel der in dem Bildsignal enthaltenen Pulse des Horizontal-Synchronsignals aus dem Differenzwert auf die noch vorzunehmene Konvertierung geschlossen werden.

Der so gewonnene Differenzwert wird dem Kennlinienbewerter zugeführt, welcher unter Berücksichtigung der über mehrere Bildzeilen gemittelten Flankensteilheit der Horizontal-Synchronimpulse ein Steuersignal für den Interpolator mit Dezimator liefert, das für die jeweilige Bildzeile ein Maß für die von diesem vorzunehmende Konvertierung des Bildsignals darstellt.

Dem Bildsignal, und damit auch dem in ihm enthaltenen Horizontal-Synchronsignal können Störungen, wie z.B. Rauschen oder Störspitzen überlagert sein. Infolge der oben beschriebenen Mittelung kann nun unabhängig von diesen Störungen aus der Höhe des in dem Speicherplatz des Phasenpufferspeichers abgespeicherten Abtastwertes unter Berücksichtigung der Kennlinienbewertung direkt auf die noch vorzunehmende Konvertierung geschlossen werden.

Die oben beschriebene gemittelte Flankensteilheit der Impulse des in dem Bildsignal enthaltenen Horizontal-Synchronsignals kann, wie nach einer weiteren Ausgestaltung der Erfindung vorgesehen ist, mittels eines Mittelwertfilters gewonnen werden, in welchem für mehrere Bildzeilen jeweils die Differenz zweier aufeinanderfolgender Abtastwerte der Rückflanke des Impulses des in dem Bildsignals enthaltenen Horizontalsynchronsignals ermittelt und abgespeichert wird und in welchem ein Mittelwertsignal dieser Differenzen generiert wird, das dem Kennlinienbewerter zugeführt wird.

Für die Verwendung in einem Farbfernsehempfänger, beispielsweise in einem Fernsehgerät oder einem Videorecorder, ist nach einer weiteren Ausgestaltung der Erfindung vorgesehen, daß das Bildsignal nach der Analog-Digital-Wandlung einer Trennschaltung zugeführt wird, in der eine Trennung des Luminanzsignals und des Chrominanzsignals vorgenommen wird, welches nachfolgend in einem Demodulator in die Komponenten U und V gewandelt wird, daß der Korrekturspeicher und der Interpolator mit Dezimator für jede Bildzeile jeweils drei Speichersegmente bzw. Speicherplätze für das Luminanzsignal und die Farbkomponenten U und V aufweist und daß die Ausgangssignale des Interpolators mit Dezimator drei Digital-Analog-Wandlern zugeführt werden.

Das ursprünglich analoge Bildsignal steht nach der zuletzt erfolgenden digitalen Analogwandlung wieder in analoger Form zur Verfügung. Es ist nun in die Komponenten Luminanzsignal und die Farbkomponentensignale U und V zerlegt. Nach der Digital-Analog-Wandlung müssen diese Signale nur doch dematriziert werden und stehen dann als RGB-Signale zur Darstellung auf einem Bildschirm zur Verfügung.

Besonders vorteilhaft ist die Verwendung der Schaltungsanordnung in einem Fernsehempfänger mit einem Bildspeicher. Dazu ist nach einer weiteren Ausgestaltung der Erfindung vorgesehen, daß zwischen den Interpolator mit Dezimator und den Digital-Analog-Wandlern ein Bildspeicher geschaltet ist.

Für die Anwendung eines Bildspeichers ist die erfindungsgemäße Schaltungsanordnung deshalb besonders geeignet, weil sie mit einem orthogonalen Abtastraster bzw. Wiedergaberaster des Bildsignals arbeitet. Es wird damit unter Einsatz eines Bildspeichers die Anwendung dreidimensionaler digitaler Filtertechniken ermöglicht, wie z.B. interferenzfreie Luminanz-/Chrominanztrennung, flimmerfreie Bildwiedergabe und Rauschreduktion.

Anhand der Zeichnung wird ein Ausführungsbeispiel der Erfindung näher erläutert. Es zeigen:
Fig. 1 ein Blockschaltbild eines Ausführungsbeispiels einer Schaltungsanordnung nach der Erfindung,
Fig. 2 die zeitliche Darstellung einiger in der in Fig. 1 dargestellten Schaltungsanordnung auftretender Signale.

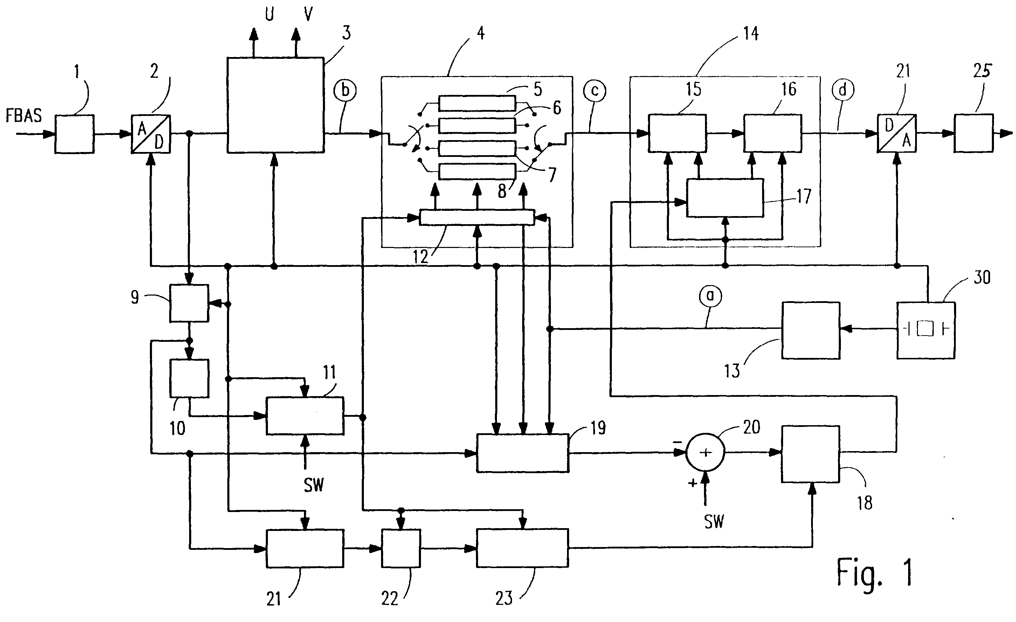

In Fig. 1 ist ein Ausführungsbeispiel der Schaltungsanordnung in Form eines Blockschaltbildes dargestellt. Es ist die vollständige Signalverarbeitung von der Analog-Digital-Wandlung bis zur Digital-Analog-Wandlung schematisch dargestellt. Eine solche Schaltungsanordnung ist beispielsweise in einem Fernsehempfänger einsetzbar.

Das der Schaltungsanordnung eingangsseitig zugeführte analoge Bildsignal (in der Fig. 1 mit FBAS bezeichnet) wird zunächst einem Tiefpaßfilter 1 zugeführt, dem ein Analog-Digital-Wandler 2 nachgeschaltet ist. Dem Analog-Digital-Wandler 2 ist ein Taktsignal, nämlich der Systemtakt, zugeführt, welcher von einem Taktgenerator 30, welcher beispielsweise ein Quarzoszillator sein kann, geliefert wird. In dem Analog-Digital-Wandler 2 wird eine Wandlung des Bildsignals in den digitalen Bereich vorgenommen. Die Abtastrate wird dabei durch den Systemtakt bestimmt. Der Systemtakt hat feste Frequenz und ist unabhängig von dem Bildsignal. Die Taktfrequenz kann frei gewählt werden; es ist lediglich darauf zu achten, daß die Bedingungen des Abtasttheorems erfüllt sind.

Das so gewonnene digitale Bildsignal ist einem in der Figur nur schematisch dargestellten Schaltungsblock 3 zugeführt, in dem zum einen das Luminanzsignal von dem Chrominanzsignal abgetrennt wird und in dem außerdem eine Demodulation des Farbsignals erfolgt. Die dabei entstehenden Farbsignalkomponenten U und V werden in gleicher Weise weiterverarbeitet wie das Luminanzsignal. Zur vereinfachten Darstellung ist in der Fig. 1 lediglich die weitere Verarbeitung des Luminanzsignals dargestellt. Dieses ist einem Korrekturspeicher 4 zugeführt, welcher vier Speichersegmente 5, 6, 7 und 8 aufweist. Jedes dieser Speichersegmente ist zur Aufnahme der Daten einer Bildzeile des Luminanzsignals vorgesehen. Die vier Speichersegmente 5, 6, 7 und 8 werden dabei zyklisch immer wieder mit einer Bildzeile beschrieben. Dies bedeutet, daß beispielsweise beginnend bei dem Speichersegment 5 die vier Speichersegmente nacheinander mit je einer Bildzeile beschrieben werden. Ist das letzte Speichersegment 8 beschrieben, wird nachfolgend wieder das Speichersegment 5 beschrieben und so fort. Das Einlesen einer Bildzeile in ein Speichersegment wird ausgelöst durch den jeweils vorangehenden Impuls des in dem digitalen Bildsignal enthaltenen Horizontalsynchronsignals.

Dazu werden diese Impulse in folgender Weise detektiert:

Das Ausgangssignal des Analog-Digital-Wandlers 2 wird einem Tiefpaßfilter 9 zugeführt, dessen Ausgangssignal wiederum auf eine Abtrennstufe 10 geführt ist, in welcher die Impulse des Horizontalsynchronsignals abgetrennt werden. Dieser Abtrennstufe 10 ist ein Flankendetektor 11 nachgeschaltet, in dem detektiert wird, wann die Rückflanken der Impulse einen vorgegebenen Schwellenwert (auf SW) erreichen. Sobald dies der Fall ist, gibt der Flankendetektor 11 ein entsprechendes Signal an eine in dem Korrekturspeicher 4 vorgesehene Steuerung 12. Nach Auftreten dieses Signales löst die Steuerung 12 ein Einlesen der darauffolgenden Bildzeile in das nächste Speichersegment aus. Dieser Einlesevorgang beginnt mit dem nächsten auf das Steuersignal des Flankendetektors 11 folgenden Impuls des Systemtaktes.

Die auf diese Weise zyklisch in die vier Speichersegmente 5, 6, 7 und 8 des Korrekturspeichers 4 eingelesenen Bildzeilen werden, ebenfalls gesteuert durch die Steuerung 12, aus diesem wieder ausgelesen. Dieser Auslesevorgang erfolgt in dem gleichen Zyklus. D.h. die Speichersegmente 5, 6, 7 und 8 werden in der gleichen Reihenfolge ausgelesen, wie zuvor in sie Daten eingelesen wurden. Der Auslesezyklus ist jedoch in dem in der Figur dargestellten Ausführungsbeispiele, in dem vier Speichersegmente vorgesehen sind, um zwei Speichersegmente gegenüber dem Einlesezyklus versetzt. Ausgehend von dem Fall, daß keine Konvertierung vorzunehmen ist, wird also beispielsweise das Speichersegment 7 ausgelesen, während gerade ein Einlesen in das Speichersegment 5 erfolgt.

Das Auslesen einer Bildzeile aus einem Speichersegment geschieht in Abhängigkeit eines Horizontalsynchronsignals, das aus dem Systemtakt abgeleitet ist. Dazu ist ein Horizontalsynchronsignalgenerator 13 vorgesehen, welchem von dem Taktgenerator 30 ein Taktsignal zugeführt ist. Das von dem Horizontalsynchrongenerator 13 generierte Signal ist der Steuerung 12 des Korrekturspeichers 4 zugeführt. Mit der Rückflanke jedes Impulses dieses Horizontalsynchronsignals wird der oben beschriebene Auslesevorgang einer Bildzeile ausgelöst, welcher nach Detektion der Rückflanke mit dem nächsten Impuls des Systemtaktes beginnt.

Da der Einlesevorgang in die Speichersegmente 5 bis 8 des Korrekturspeichers 4 in Abhängigkeit des in dem Bildsignal enthaltenen Horizontalsynchronsignals erfolgt, der Auslesevorgang jedoch in Abhängigkeit des von dem festen Systemtakt gesteuerten Horizontalsynchronsignals vorgenommen wird, ergibt sich auf diese Weise ein Phasenausgleich zwischen den Eingangssignalen und den Ausgangssignalen des Korrekturspeichers 4. Da das Ein- und Auslesen der Daten aus dem Korrekturspeicher jedoch im Systemtakt erfolgt, kann der Phasenausgleich zwischen den beiden Signalen, d.h. also die Konvertierung des Bildsignals, nur in ganzzahligen Vielfachen der Periode des Systemtaktes und damit auch der Abtastperiode vorgenommen werden. Dies bedeutet, daß das Ausgangssignal des Korrekturspeichers noch Phasenverschiebungen der einzelnen Bildzeilen enthalten kann, welche kleiner als eine Abtastperiode sind. Da jedoch auch diese Phasenschwankungen optisch noch störend sind, ist dem Korrekturspeicher ein Interpolator mit Dezimator 14 nachgeschaltet, in dem der restliche Phasenausgleich vorgenommen wird, welcher kleiner als eine Abtastperiode ist.

In dem Interpolator mit Dezimator 14 ist ein Zugriffsspeicher 15 vorgesehen, in den die von dem Korrekturspeicher 4 gelieferten Daten eingelesen werden. Es handelt sich dabei um ein in der Figur nicht näher dargestelltes Schieberegister, welches ebenfalls mit dem Systemtakt getaktet ist. Die in dem Zugriffsspeicher 15 gespeicherten Daten sind einem linearen zeitvarianten Filter 16 zugeführt, welches ebenfalls Bestandteil des Interpolators mit Dezimator ist. Dieses lineare zeitvariante Filter 16 arbeitet zur Berechnung von Zwischenwerten, welche zwischen den Abtastwerten des Signals liegen, mit verschiedenen Faktoren, mit denen die Abtastwerte multipliziert werden. Auf die genaue Funktion dieses an sich bekannten Filters soll hier nicht näher eingegangen werden; ein derartiges Filter ist beispielsweise aus der eingangs erwähnten EP-A-0 300 633 bekannt. Die in dem Filter für die Berechnung der Zwischenwerte benötigten Faktoren werden mittels eines Selektors 17 ausgewählt, welcher ebenfalls Bestandteil des Interpolators mit Dezimator 14 ist. Zur Bestimmung der geeigneten Faktoren ist jedoch genaue Kenntnis darüber erforderlich, welcher Phasenausgleich zwischen den beiden Signalen bzw. welche Feinkonvertierung des Bildsignals in dem Interpolator mit Dezimator 14 vorzunehmen ist. Dazu ist dem Selektor 17 von einem Kennlinienbewerter 18 ein Signal zugeführt, welches für jede Bildzeile angibt, welche Feinkonvertierung mittels des Interpolators und Dezimators vorzunehmen ist.

Das von dem Kennlinienbewerter 18 erzeugte Signal wird auf folgende Weise gewonnen:

Dem Tiefpaßfilter 9 ist ein Phasenpufferspeicher 19 nachgeschaltet. Dieser Phasenpufferspeicher 19 weist in der Figur nicht dargestellte Speicherplätze auf. Es sind genau so viele Speicherplätze vorgesehen, wie in dem Korrekturspeicher 4 Speichersegmente vorhanden sind. Jedem Speichersegment 5 bis 8 des Korrekturspeichers 4 ist in dem Phasenpufferspeicher 19 ein Speicherplatz fest zugeordnet. Bei der Detektion der Rückflanke eines Impulses des in dem Bildsignal enthaltenen Horizontalsynchronsignals wird neben dem Einlesevorgang der darauffolgenden Bildzeile in ein Speichersegment des Korrekturspeichers 4 der erste Abtastwert nach Detektion der Rückflanke in den jeweils zugeordneten Speicherplatz des Phasenpufferspeichers 19 eingelesen. Die Größe des Wertes dieses Abtastwertes, der auf der fallenden Flanke des Impulses des Horizontalsynchronsignals liegt, ist bereits eine primäre Meßgröße für die noch vorhandene Phasenverschiebung.

Mit jedem Auslesen einer Bildzeile aus einem Speichersegment des Korrekturspeichers 4 wird dieser zugehörige Phasenmeßwert aus dem Phasenpuf ferspeicher 19 ausgelesen. Der Meßwert wird aber zunächst einem Addierer 20 zugeführt, in dem er von einem Schwellenwert (SW) subtrahiert wird. Auf diese Weise ist sichergestellt, daß der Phasenmeßwert unabhängig von den absoluten Amplitudenpegeln des Bildsignals und damit unabhängig von Schwankungen des Pegels wird. Das Ausgangssignal des Addierers 20 ist dem Kennlinienbewerter 18 zugeführt.

Eine ausschließliche Auswertung dieses Signals durch den Kennlinienbewerter 18 würde jeodch noch nicht berücksichtigen, welche Steilheit die Rückflanke der Impulse des Horizontalsynchronsignals aufweist. Hierbei ist insbesondere zu berücksichtigen, daß die Steilheit der Impulse schwanken kann bzw. sehr verschieden sein kann. Dies gilt beispielsweise für die Wiedergabe von Signalen von einem Videorecorder.

Aus diesem Grunde wird das Ausgangssignal des Tiefpaßfilters 9 außerdem einem Differenzierer 21 zugeführt, welcher ebenfalls mit dem Systemtakt getaktet wird. In dem Differenzierer 21 wird laufend die Differenz zwischen zwei aufeinanderfolgenden Abtastwerten gebildet. Diese Differenzwerte werden einem Abtast- und Halteglied 22 zugeführt. Diesem Abtast- und Halteglied 22 ist außerdem das von dem Flankendetektor 11 gelieferte Steuersignal zugeführt, welches eine Detektion der Rückflanke eines Impulses des in dem Bildsignal enthaltenen Horizontalsynchronsignals angibt. Bei jeder Detektion liefert das Abtast- und Halteglied 22 die von dem Differenzierer 21 gelieferte Differenz an ein Mittelwertfilter 23. Diesem Mittelwertfilter 23 wird also für jede Rückflanke eines Impulses des Horizontalsynchronsignals jeweils ein Differenzwert zugeführt. Diese Differenzwerte geben die Steilheit der Rückflanke der Impulse des Horizontalsynchronsigals an. In dem Mittelwertfilter 23 werden nun diese Werte fortlaufend für mehrere Bildzeilen abgespeichert. Aus diesen abgespeicherten Werten wird ein Mittelwert gebildet. Dieser Mittelwert wird dem Kennlinienbewerter 18 zugeführt. Der Kennlinienbewerter 18 nimmt nun unter Berücksichtigung der über mehrere Bildzeilen gemittelten Flankensteilheit der Impulse des Horizontalsynchronsignals eine Bewertung des von dem Addierer 20 gelieferten Signales vor, welches ein Maß für die noch vorzunehmende Phasenkorrektur ist. Auf diese Weise ist das von dem Kennlinienbewerter 18 dem Selektor 17 des Interpolators mit Dezimator 14 zugeführte Steuersignal sehr genau. In dem Interpolator mit Dezimator 14 kann nun eine entsprechende Feinkonvertierung vorgenommen werden. Die dazu errechneten Zwischenwerte, welche zwischen den Abtastwerten des Bildsignals liegen, werden einem Digital-Analog-Wandler 24 zugeführt. Die hier erfolgende Digital-Analog-Wandlung erfolgt ebenfalls in dem Systemtakt. Dem Digital-Analog-Wandler ist ein Tiefpaßfilter 25 nachgeschaltet. An dem Ausgang dieses Tiefpaßfilters 25 steht das Bildsignal nun wieder in analoger Form zur Verfügung. Dieses Bildsignal befindet sich nun in richtiger Phasenlage zu dem von dem Horizontalsynchronimpulsgenerator 13 vorgegebenen Horizontalsynchronraster.

Eine in der Fig. 1 nicht dargestellte Verarbeitung der Farbkomponentensignale U und V erfolgt in dem Korrekturspeicher 4 und in dem Interpolator mit Dezimator 14 in entsprechender Weise. Dies bedeutet beispielsweise, daß in dem Korrekturspeicher 4 für jede Bildzeile nicht nur ein Speichersegment sondern drei Speichersegmente vorgesehen sind, wobei die drei Speichersegmente mit dem Luminanzsignal und den beiden Farbkomponentensignalen einer Bildzeile beschrieben werden. Entsprechendes gilt für die Verarbeitung in dem Interpolator und Dezimator 14.

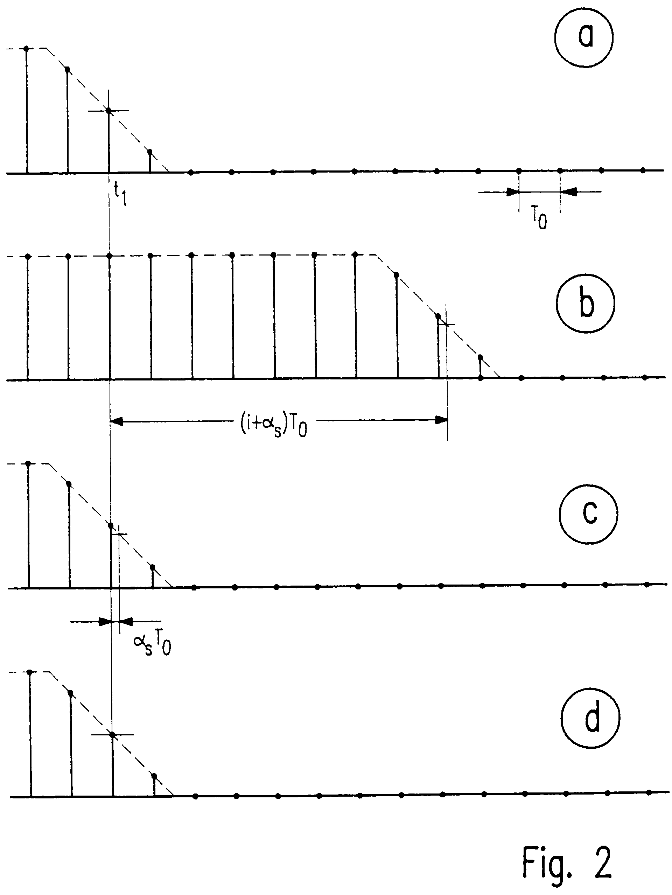

In der Fig. 2 sind einige zeitliche Signalverläufe dargestellt, wie sie in der Schaltungsanordnung gemäß Fig. 1 auftreten.

In dem Signalverlauf a ist der zeitliche Verlauf des von dem Horizontal-Synchron-Impuls-Generators gelieferten Horizontalsynchronsignals dargestellt. In dem in der Fig. 2 gewählten Zeitausschnitt ist eine Rückflanke eines Impulses dieses Signals zu erkennen. Es handelt sich bei diesem Signal um ein digitales Signal, welches also zu diskreten Zeitpunkten vorhanden ist. Bei diesen Zeitpunkten handelt es sich um diejenigen des Systemtaktes, welche auf der Zeitachse in der Darstellung gemäß Fig. 2 mit Punkten angedeutet sind. Der Abstand zwischen zwei Takten, also die Abtastperiode, ist in der Fig. 2 mit T₀ angedeutet. Für die Bestimmung der genauen Phasenlage der Rückflanke des Impulses des Horizontalsynchronsignals wird dieses mit einem Schwellenwert verglichen, welcher in dem in der Figur dargestellten Beispiel der halben Höhe des Impulses entspricht. In dem Kurvenverlauf a unterschreitet der Pegel des Impulses diesen Sollwert zum Zeitpunkt t₁.

Durch das im Kurvenverlauf a dargestellte, von dem Horizontalsynchronimpulsgenerator gelieferte Horizontalsynchronsignal ist die Soll-Phasenlage vorgegeben.

Das in dem Signalverlauf b dargestellte Bildsignal sollte die gleiche Phasenlage aufweisen wie das Synchronsignal gemäß Kurvenverlauf a. Tatsächlich ist jedoch in dem Beispiel in der Darstellung gemäß Fig. 2 der in dem Kurvenverlauf b dargestellte Impuls eines in dem Bildsignal enthaltenen Horizontalsynchronsignals nicht in der gleichen Phasenlage. Der Vergleich dieses Signals in dem Flankendetektor 11 nach Fig. 1 mit dem Schwellenwert SW ergibt vielmehr eine Abweichung um ein ganzzahliges Vielfaches i der Abtastperiode T₀. Darüber hinaus liegt auch noch eine Phasenverschiebung um α_{S} der Abtastperiode T₀ vor. Diese Phasenverschiebung α_{S} ∗ T₀ ist kleiner als eine Abtastperiode T₀.

Infolge des Einlesens des digitalen Bildsignals in den Korrekturspeicher 4 in Abhängigkeit der Impulse des in dem Bildsignal enthaltenen Horizontalsynchronsignals und des Auslesens des Signals aus dem Korrekturspeicher 4 in Abhängigkeit der Impulse des von dem Horizontalsynchronimpulsgenerator in Abhängigkeit des Systemtaktes gelieferten Horizontalsynchronsignals ergibt sich am Ausgang des Korrekturspeichers 4 der in Fig. 2 gemäß Kurvenverlauf c dargestellte Signalverlauf. Mittels des Korrekturspeichers 4 ist hier bereits eine Korrektur der Phasenverschiebung (i+αₛ)T₀ vorgenommen worden. Es verbleibt jedoch noch die Phasenverschiebung αs ∗ T₀.

Diese Phasenverschiebung wird in der oben beschriebenen Weise mittels des Interpolators mit Dezimator 14 vorgenommen, welcher dazu für jede Bildzeile ein Signal von dem Kennlinienbewerter 18 erhält, welches ein Maß für die vorzunehmende Phasenkorrektur darstellt. Das Ausgangssignal des Interpolators mit Dezimator 14 ist in Fig. 2 mit dem Signalverlauf d angedeutet. Es ist deutlich, daß die Rückflanke des in der Figur dargestellten Impulses des digitalen Bildsignals sich nunmehr in Phase mit der im Kurvenverlauf a dargestellten Rückflanke des Impulses des von dem Horizontalsynchronimpulsgenerator 13 gelieferten Signals befindet. Somit ist das an dem Ausgang des Interpolators und Dezimators 14 anliegende Bildsignal, welches am Ausgang des Tiefpaßfilters 22 in analoger Form zur Verfügung steht, nunmehr in richtiger Phasenlage zu dem von dem Horizontalsynchronimpulsgenerator 13 vorgegebenen Synchronraster.

Die in der Fig. 1 dargestellte Schaltungsanordnung mit ihren Signalverläufen gemäß Fig. 2 ist beispielsweise in einem Fernsehempfänger einsetzbar. Es kann dann zwischen dem Interpolator und Dezimator 14 und dem Digital-Analog-Wandler 21 ein in den Figuren nicht dargestellter Bildspeicher vorgesehen sein, in welchem eine weitere Verarbeitung des Signals beispielsweise zur Rauschreduktion erfolgt.

## Patentansprüche

1. Digitale Schaltungsanordnung zur Verarbeitung eines analogen Bildsignals, welche mit einem nicht mit dem Bildsignal verkoppeltem festen Systemtakt arbeitet, in welcher das analoge Bildsignal mittels eines Analog-Digital-Wandlers (2) in ein digitales in dem Systemtakt vorliegendes Bildsignal umgesetzt und als solches verarbeitet wird und in welcher ein Korrekturspeicher (4) und ein Interpolator mit Dezimator (14) vorgesehen sind, die der Konvertierung des digitalen Bildsignals auf ein durch den Systemtakt vorgegebenes Synchronsignalraster dienen, dadurch gekennzeichnet,
daß der Korrekturspeicher (4) eine vorgegebene Anzahl von Speichersegmenten (5,6,7,8) aufweist, welche zur Abspeicherung der Abtastwerte je einer Bildzeile vorgesehen sind, die in dem Systemtakt ein- bzw. ausgelesen werden, daß durch jeden Impuls des Horizontalsynchronsignals des noch nicht konvertierten Bildsignals ein Einlesevorgang der darauffolgenden Bildzeile in ein Speichersegment (5,6,7,8) ausgelöst wird und daß durch jeden Impuls des vom Systemtakt abgeleiteten Horizontalsynchronsignals ein Auslesevorgang der auf die zuvor ausgelesenen Bildzeile folgenden Bildzeile ausgelöst wird.

2. Schaltungsanordnung nach Anspruch 1,
dadurch gekennzeichnet, daß das noch nicht konvertierte digitale Bildsignal einem Tiefpaßfilter (9) und nachfolgend einer Abtrennstufe (10) zugeführt wird, in der die Impulse des in ihm enthaltenen Horizontalsynchronsignals abgetrennt werden und der ein Flankendetektor (11) nachgeschaltet ist, in dem detektiert wird, wann die Rückflanken der Impulse einen vorgegebenen Schwellenwert erreichen, und der gegebenenfalls ein Steuersignal an den Korrekturspeicher (4) zur Auslösung eines Einlesevorganges einer Bildzeile abgibt, und daß jeweils ein Auslesevorgang ausgelöst wird, wenn die Rückflanken der Impulse des vom Systemtakt abgeleiteten Horizontalsynchronsignals den vorgegebenen Sollwert erreichen.

3. Schaltungsanordnung nach Anspruch 1 oder Anspruch 2,
dadurch gekennzeichnet, daß jeder Ein- bzw. Auslesevorgang einer Bildzeile nach dessen Auslösung mit dem nächsten Impuls des Systemtaktes beginnt.

4. Schaltungsanordnung nach einem der Ansprüche 1 bis 3,
dadurch gekennzeichnet, daß der Einlesevorgang der Daten der Bildzeilen in die Speichersegmente (5, 6, 7, 8) in einem Einlesezyklus vorgenommen wird, in welchem die Speichersegmente (5, 6, 7, 8) in vorgegebener Reihenfolge mit den Daten je einer Bildzeile beschrieben werden, wobei nach Beschreiben des letzten Speichersegments (8) wieder bei dem ersten (5) begonnen wird, und daß der Auslesevorgang in einem gleichen Zyklus vorgenommen wird, welcher gegenüber dem Einlesezyklus bei nicht erforderlicher Konvertierung des Bildsignals auf den Systemtakt um eine vorgegebene Anzahl von Speichersegmenten versetzt ist.

5. Schaltungsanordnung nach Anspruch 4,
dadurch gekennzeichnet, daß die Zahl von Speichersegmenten (5, 6, 7, 8), um die der Auslesezyklus gegenüber dem Einlesezyklus bei nicht vor zunehmender Konvertierung versetzt ist, etwa gleich der halben Zahl der insgesamt vorgesehenen Speichersegmente ist.

6. Schaltungsanordnung nach einem der Ansprüche 1 bis 5,
dadurch gekennzeichnet, daß vier Speichersegmente vorgesehen sind.

7. Schaltungsanordnung nach Anspruch 5 und 6,
dadurch gekennzeichnet, daß Auslesezyklus und Schreibzyklus bei nicht vorzunehmender Konvertierung um zwei Speichersegmente gegeneinander versetzt sind.

8. Schaltungsanordnung nach einem der Ansprüche 1 bis 7,
dadurch gekennzeichnet, daß jedem Speichersegment (5, 6, 7, 8) des Korrekturspeichers je ein Speicherplatz eines Phasenpufferspeichers (19) fest zugeordnet ist und daß bei Detektion der Rückflanke eines Impulses des Horizontal-synchronsignals des nicht konvertierten Bildsignals der nächste Abtastwert des Bildsignals als Maß für die von dem Interpolator mit Dezimator vorzunehmende Konvertierung, in demjenigen Speicherplatz abgespeichert wird, der dem Speichersegment (5, 6, 7, 8) zugeordnet ist, in das die nachfolgende Bildzeile eingelesen wird.

9. Schaltungsanordnung nach Anspruch 8,
dadurch gekennzeichnet, daß für jede Bildzeile der in dem entsprechenden Speicherplatz des Phasenpufferspeichers (19) abgetastete Abtastwert einem Kennlinienbewerter (18) zugeführt wird, welcher unter Berücksichtigung der über mehrere Bildzeilen gemittelten Flankensteilheit der Horizontalsynchronsignal-Impulse des nicht konvertierten Bildsignals ein Steuersignal für den Interplator mit Dezimator (14) liefert, das für die jeweilige Bildzeile ein Maß für die von diesem vorzunehmende Konvertierung des Bildsignals darstellt.

10. Schaltungsanordnung nach Anspruch 9,
dadurch gekennzeichnet, daß jeder aus einem Speicherplatz des Phasenpufferspeichers (19) ausgelesene Abtastwert einem Addierer (20) zugeführt wird, in welchem eine Differenzbildung mit einem konstanten Schwellenwert vorgenommen wird und dessen Ausgangssignale dem Kennlinienbewerter (18) zugeführt werden.

11. Schaltungsanordnung nach Anspruch 10,
dadurch gekennzeichnet, daß die Ermittlung der mittleren Flankensteilheit mittels eines Mittelwertfilters (23) vorgenommen wird, in welchem für mehrere Bildzeilen jeweils die Differenz zweier aufeinanderfolgender Abtastwerte der Rückflanke des Impulses des in dem Bildsignals enthaltenen Horizontalsynchronsignals ermittelt und abgespeichert wird und in welchem ein Mittelwertsignal dieser Differenzen generiert wird, das dem Kennlinienbewerter (18) zugeführt wird.

12. Schaltungsanordnung nach einem der Ansprüche 1 bis 11,
dadurch gekennzeichnet, daß das Bildsignal nach der Analog-Digital-Wandlung einer Trennstufe (3) zugeführt wird, in der eine Trennung des Luminanzsignals und des Chrominanzsignals vorgenommen wird, welches nachfolgend in einem Demodulator in die Komponenten U und V gewandelt wird, daß der Korrekturspeicher (4) und der Interpolator mit Dezimator (14) für jede Bildzeile jeweils drei Speichersegmente bzw. Speicherplätze für das Luminanzsignal und die Farbkomponenten U und V aufweist und daß die Ausgangssignale des Interpolators mit Dezimator drei Digital-Analog-Wandlern zugeführt werden.

13. Schaltungsanordnung nach Anspruch 12,
dadurch gekennzeichnet, daß zwischen den Interpolator mit Dezimator und den Digital-Analog-Wandlern ein Bildspeicher geschaltet ist.

## Claims

1. Digital circuit arrangement for processing an analog video signal, which operates with a fixed system clock that is not coupled to the video signal, in which the analog video signal is converted by an analog/digital converter (2) into a digital video signal available with the system clock and is processed as a digital signal and which arrangement comprises a correction memory (4) and an interpolator with decimator (14) which are used for converting the digital video signal into a synchronizing signal pattern predetermined by the system clock, characterized in that the correction memory (4) has a predetermined number of memory sections (5, 6, 7, 8) arranged for storing each the sample values of one picture line, which sample values are written or read out with the system clock, in that each horizontal synchronizing pulse of the still unconverted video signal triggers a writing operation of the subsequent picture line into a memory section (5, 6, 7, 8) and in that each horizontal synchronizing pulse derived from the system clock triggers a reading operation of the picture line that follows the previously read picture line.

2. Circuit arrangement as claimed in Claim 1, characterized in that the still unconverted digital video signal is applied to a low-pass filter (9) and thereafter to a separation circuit (10) in which the horizontal synchronizing pulses contained therein are separated and which is followed by an edge detector (11) in which it is detected when the trailing edges of the pulses reach a predetermined nominal value and the detector applying, as required, a control signal to the correction memory (4) for triggering a reading operation for a picture line and in that the writing operation is triggered each time the trailing edges of the horizontal synchronizing pulses derived from the system clock reach the predetermined nominal value.

3. Circuit arrangement as claimed in Claim 1 or 2, characterized in that each writing or reading operation for a picture line, once it has been triggered, commences at the next pulse of the system clock.

4. Circuit arrangement as claimed in one of the Claims 1 to 3, characterized in that the picture line data are written into the memory sections (5, 6, 7, 8) during a write cycle in which the data of each picture line are written into the individual memory sections (5, 6, 7, 8), in a predetermined order, the first memory section (5) being restarted after the last section (8) has been written into, and in that the data are read out in a similar cycle which, compared the write cycle, is shifted by a preset number of memory sections if it is not necessary to convert the video signal to the system clock.

5. Circuit arrangement as claimed in Claim 4, characterized in that the number of memory sections (5, 6, 7, 8) by which the read cycle is shifted with respect to the write cycle if no conversion is to take place, is approximately half the total number of available memory sections.

6. Circuit arrangement as claimed in one of the Claims 1 to 5, characterized in that four memory sections are provided.

7. Circuit arrangement as claimed in Claims 5 and 6, characterized in that the read and write cycles are shifted with respect to each other by two memory sections if no conversion is to take place.

8. Circuit arrangement as claimed in one of the Claims 1 to 7, characterized in that one memory location of a phase buffer (19) is fixedly allocated to each memory section (5, 6, 7, 8) of the correction memory and in that upon detection of the trailing edge of a horizontal synchronizing pulse of the unconverted video signal the next sample value of the video signal is stored in the memory location allocated to the memory section (5, 6, 7, 8) into which the next picture line is written, as a measure for the conversion to be performed by the interpolator with decimator.

9. Circuit arrangement as claimed in Claim 8, characterized in that for each picture line the value sampled in the corresponding memory location of the phase buffer (19) is applied to a characteristic line evaluation circuit (18) which circuit produces a control signal for the interpolator with decimator (14) in response to the edge steepness of the horizontal synchronizing pulses of the unconverted video signal averaged over a plurality of picture lines, this control signal representing for each picture line an estimate for the conversion of the video signal to be performed by the interpolator.

10. Circuit arrangement as claimed in Claim 9, characterized in that each sample value read from a memory location of the phase buffer (19) is applied to an adder (20) in which a difference with a constant threshold value is formed and whose output signals are applied to the characteristic line evaluation circuit (18).

11. Circuit arrangement as claimed in Claim 10, characterized in that the mean edge steepness is computed by means of a mean value filter (23) in which for a plurality of picture lines the difference between each pair of two successive sample values of the trailing edges of the horizontal synchronizing pulses contained in the video signal is computed and stored and in which a mean-value signal of these differences is produced, which is applied to the characteristic line evaluation circuit (18).

12. Circuit arrangement as claimed in one of the Claims 1 to 11, characterized in that the video signal is applied to a separation circuit (3) after the analog/digital conversion, in which circuit a separation is effected into the luminance signal and the chrominance signal which chrominance signal is thereafter converted in a demodulator into the components U and V, in that the correction memory (4) and the interpolator with decimator (14) have three memory sections or memory locations respectively, for each picture line for the luminance signal and the colour components U and V, and in that the output signals of the interpolator with decimator are applied to three digital/analog converters.

13. Circuit arrangement as claimed in Claim 12, characterized in that a picture memory is inserted between the interpolator with decimator and the digital/analog converter.

## Revendications

1. Circuit numérique de traitement d'un signal d'image analogique qui travaille avec une horloge fixe asynchrone avec le signal d'image, dans lequel le signal d'image analogique est converti à l'aide d'un convertisseur analogique/numérique (2) en un signal d'image numérique présent dans l'horloge et traité en tant que tel et dans lequel sont prévus une mémoire de correction (4) et un interpolateur avec décimalisateur (14) qui servent à la conversion du signal d'image numérique sur une trame de signal de synchronisation prédéterminée par l'horloge,
caractérisé en ce
que la mémoire de correction (4) présente un nombre prédéterminé de segments de mémoire (5, 6, 7, 8) qui sont prévus pour la sauvegarde de valeurs de balayage de respectivement une ligne d'image qui sont sauvées ou lues dans l'horloge, en ce que, par chaque impulsion du signal de synchronisation horizontale du signal d'image qui n'a pas encore été converti, est déclenchée une procédure de sauvegarde de la ligne d'image suivante dans un segment de mémoire (5, 6, 7, 8) et en ce que, par chaque impulsion du signal de synchronisation horizontale dérivé de l'horloge, une procédure de lecture de la ligne d'image suivant la ligne d'image lue précédemment est déclenchée.

2. Circuit selon la revendication 1,
caractérisé en ce que
le signal d'image numérique qui n'a pas encore été converti est amené à un filtre passe-bas (9) et ensuite à un étage séparateur (10) dans lequel les impulsions du signal de synchronisation horizontale qu'il contient sont séparées et en aval duquel est monté un détecteur de flancs (11) dans lequel est détecté le moment où les flancs postérieurs des impulsions atteignent une valeur seuil prédéterminée et qui délivre éventuellement un signal de commande à la mémoire de correction (4) pour le déclenchement d'une procédure de sauvegarde d'une ligne d'image et en ce que respectivement une procédure de lecture est déclenchée lorsque les flancs postérieurs des impulsions du signal de synchronisation horizontale dérivé de l'horloge atteignent la valeur de consigne prédéterminée.

3. Circuit selon la revendication 1 ou 2,
caractérisé en ce que
chaque procédure de sauvegarde ou de lecture d'une ligne d'image commence après son déclenchement par l'impulsion suivante de l'horloge.

4. Circuit selon l'une des revendications 1 à 3,
caractérisé en ce que
la procédure de sauvegarde des données des lignes d'image dans les segments de mémoire (5, 6, 7, 8) est effectuée dans une cycle de sauvegarde dans lequel les segments de mémoire (5, 6, 7, 8) sont occupés dans l'ordre prédéterminé par les données de respectivement une ligne d'image, auquel cas, après l'occupation du dernier segment de mémoire (8), la procédure recommence à partir du premier (5) et en ce que la procédure de lecture est effectuée dans un même cycle qui est décalé par rapport au cycle de sauvegarde en cas de conversion non indispensable du signal d'image sur l'horloge d'un nombre prédéterminé de segments de mémoire.

5. Circuit selon la revendication 4,
caractérisé en ce que
le nombre de segments de mémoire (5, 6, 7, 8) dont est décalé le cycle de lecture par rapport au cycle de sauvegarde lorsque la conversion n'est pas effectuée est approximativement égal à la moitié du nombre total de segments de mémoire prévus.

6. Circuit selon l'une des revendications 1 à 5,
caractérisé en ce que
quatre segments de mémoire sont prévus.

7. Circuit selon l'une des revendications 5 et 6,
caractérisé en ce que
le cycle de lecture et le cycle d'écriture sont décalés réciproquement de deux segments de mémoire lorsque la conversion n'est pas effectuée.

8. Circuit selon l'une des revendications 1 à 7,
caractérisé en ce
qu'à chaque segment de mémoire (5, 6, 7, 8) de la mémoire de correction est respectivement affecté de manière fixe un emplacement de mémoire d'une mémoire tampon de phase (19) et en ce qu'en cas de détection du flanc postérieur d'une impulsion du signal de synchronisation horizontale du signal d'image non converti, la valeur de balayage suivante du signal d'image est sauvée comme une mesure de la conversion à effectuer par l'interpolateur avec décimalisateur, dans l'emplacement de mémoire qui est affecté au segment de mémoire (5, 6, 7, 8) dans lequel la ligne d'image suivante est sauvée.

9. Circuit selon la revendication 8,
caractérisé en ce que
la valeur de balayage balayée pour chaque ligne d'image de l'emplacement de mémoire correspondant de la mémoire tampon de phases (19) est amenée pour chaque ligne d'image à un dispositif d'évaluation des caractéristiques (18) qui produit, en considérant la pente des flancs des impulsions du signal de synchronisation horizontale du signal d'image non converti dont la moyenne a été établie sur plusieurs lignes d'image, un signal de commande pour l'interpolateur avec décimalisateur (14) qui représente pour la ligne d'image respective une mesure de la conversion du signal d'image à effectuer par celui-ci.

10. Circuit selon la revendication 9,
caractérisé en ce que
chaque valeur de balayage lue d'un emplacement de mémoire de la mémoire tampon de phases (19) est amenée à un additionneur (20) dans lequel la formation d'une différence avec une valeur seuil constante est effectuée et des signaux de sortie sont amenés au dispositif d'évaluation des caractéristiques (18).

11. Circuit selon la revendication 10,
caractérisé en ce que
la détermination de la pente des flancs moyenne est effectuée à l'aide d'un filtre de moyennes (23) dans lequel la différence de deux valeurs de balayage successives du flanc postérieur de l'impulsion du signal de synchronisation horizontale contenu dans le signal d'image est déterminée pour plusieurs lignes d'image et y est sauvée et dans lequel un signal de moyenne de ces différences est généré et amené au dispositif d'évaluation des caractéristiques (18).

12. Circuit selon l'une des revendications 1 à 11,
caractérisé en ce que
le signal d'image est amené après la conversion analogique/numérique à un étage séparateur (3) dans lequel est effectuée une séparation du signal de luminance et du signal de chrominance qui est ensuite converti dans un démodulateur en composantes U et V, en ce que la mémoire de correction (4) et l'interpolateur avec décimalisateur (14) présentent pour chaque ligne d'image respectivement trois segments de mémoire ou emplacements de mémoire pour le signal de luminance et les composantes couleur U et V et en ce que les signaux de sortie de l'interpolateur avec décimalisateur sont amenés à trois convertisseurs numériques/analogiques.

13. Circuit selon la revendication 12,
caractérisé en ce
qu'une mémoire d'image est montée entre l'interpolateur avec décimalisateur et le convertisseur numérique/analogique.
